# EUROPEAN PATENT SPECIFICATION

(11) **EP 2 085 601 B1**
(45) Date of publication and mention of the grant of the patent: **25.05.2011**
(21) Application number: 09152044.5
(22) Date of filing: 04.02.2009
(51) Int. Cl.: F02M 25/07, F16K 1/16

(54) **Exhaust gas recirculation valve for vehicle**
Abgasrückführungsventil für Fahrzeug
Clapet de recyclage des gaz d'échappement pour véhicule

(30) Priority: 04.02.2008 KR 20080011342; 02.02.2009 KR 20090007845; 02.02.2009 KR 20090007846
(43) Date of publication of application: 05.08.2009
(73) Proprietor: Kamtec Inc., Jincheon-gun, Chungbuk 365-822 (KR)
(72) Inventor: Jung, Ki Ho, 709-1006, Daewoo Iaan Apt., Gak-ri, 363-782, Chungbuk (KR); Jang, Yong Soo,, 706-031, Daegu (KR); Lim, Chang Sik, 502-303, Hyundai 5 cha, Sadong-ri, 467-854, Gyeonggi-do (KR); Park, Seok Ryul, 613-1503, Woolin Feelyou 2 cha, Gak-ri, 363-883, Chungbuk (KR)
(74) Representative: Thinat, Michel

(56) References cited:
- WO-A-00/28203
- WO-A-99/31375
- WO-A-2006/056279
- DE-A1-102005 002 266
- DE-A1-102005 017 562
- US-A1- 2005 241 702

## Description

### CROSS REFERENCE TO RELATED APPLICATION

This application claims the benefit of the Patent Korean Application Nos. 10-2008-0011342, filed on February 4, 2008, 10-2009-0007845, filed on February 2, 2009 and 10-2009-0007846, filed on February 2, 2009 which are hereby incorporated by reference as if fully set forth herein.

### BACKGROUND OF THE DISCLOSURE

### Field of the Disclosure

The present invention relates to an exhaust gas recirculation (EGR) valve for a vehicle.

### Discussion of the Related Art

In general, in order to suppress generation of nitrogen oxide from exhaust gas of an engine mounted to a vehicle, a method used presently mostly is use of the EGR valve for adding a portion of cooled exhaust gas to fuel-air mixture and introducing to a cylinder.

Because a related art EGR valve is provided with an exhaust gas valve and EGR operation valve individually, not an unnecessary layout is required, but also operation thereof is unstable due to operation of the valve by different driving sources. Moreover, since the high temperature exhaust gas flows through the EGR valve, causing degradation of the EGR valve by the high temperature exhaust gas, a countermeasure is required, urgently.
It is known from WO2006/056279A1 to provide a combined EGR valve and exhaust throttle on a common shaft.

### SUMMARY OF THE DISCLOSURE

Accordingly, the present invention is directed to an exhaust gas recirculation (EGR) valve for a vehicle.

An object of the present invention is to provide an EGR valve of three-way type for a vehicle, in which single driving source is used for making linear control of the EGR valve with the same shaft.

Another object of the present invention is to provide an EGR valve for a vehicle, which is cooled by air for preventing the EGR valve from degrading by high temperature exhaust gas.

Another object of the present invention is to provide an EGR valve for a vehicle, which enables stable re-circulation of exhaust gas to a suction manifold of the vehicle.

Another object of the present invention is to provide an EGR valve for a vehicle, which can minimize leakage of the exhaust gas to an outside of the EGR valve of the vehicle.

Additional advantages, objects, and features of the disclosure will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

These objects and other advantages are achieved by an EGR valve according to claim 1.

The flow line in the valve housing includes an exhaust gas flow line having an exhaust gas hole formed therein for flow in/out of the exhaust gas, and a recirculation flow line having an EGR hole for recirculation of the exhaust gas to the suction manifold.

The flow line in the valve housing further includes a bypass flow line for making the exhaust gas flow line and the re-circulation flow line in communication.

The valve unit includes a rotation shaft coupled to the driving unit and passed through the flow line in the valve housing, an exhaust control valve mounted to the rotation shaft for controlling opening of an exhaust gas hole according to rotation of the rotation shaft, and a re-circulation control valve mounted to the rotation shaft for controlling opening of an EGR hole according to rotation of the rotation shaft.

The opening of the exhaust control valve is linearly proportional to the opening of the recirculation control valve.

The EGR valve further includes a heat cutoff plate mounted between the valve housing and the driving unit for preventing the driving unit suffering from damage by the high temperature exhaust gas flowing through the flow line.

The rotation shaft includes a first rotation shaft coupled to a gear unit in the driving unit, a coupling coupled to the first rotation shaft for receiving rotation force through the first rotation shaft, and a second rotation shaft coupled to the other side of the coupling having the exhaust control valve and the re-circulation valve mounted thereto.

The coupling includes a coupling plate, first and second cross shafts projected outwardly to left and right directions from the coupling plate respectively, wherein the first and second cross shafts are engaged with first and second cross recesses in ends of the first and second rotation shafts respectively.

The first cross shaft includes a spacing projection on a center for preventing heat from transmitting to the first rotation shaft from the high temperature exhaust gas through the second rotation shaft and the coupling, wherein the spacing projection makes point to point contact with the center of the inside of the first cross recess in the first rotation shaft.

The valve portion has a sealing member mounted thereto for preventing leakage of the exhaust gas.

The sealing member includes a sealing holder coupled to the second rotation shaft on an outside circumference of the second rotation shaft in a direction of the second cross recess, wherein the sealing holder has an inserting hole recessed inward toward the second rotation shaft.

The sealing member further includes a compression ring positioned between the exhaust control valve coupled to the second rotation shaft and the sealing holder and inserted in the inserting hole in the sealing holder.

The compression ring is in linear contact to an inside of the sealing holder.

The EGR valve further includes an elastic member between the coupling and the sealing holder for biasing the sealing holder toward the compression ring.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 illustrates a perspective view of an EGR valve for a vehicle in accordance with a preferred embodiment of the present invention.

FIG. 2 illustrates a cross section of a valve housing in accordance with a preferred embodiment of the present invention.

FIG. 3 illustrates a cross section of an EGR valve for a vehicle in accordance with a preferred embodiment of the present invention.

FIG. 4 illustrates a perspective view of a valve unit of an EGR valve for a vehicle in accordance with a preferred embodiment of the present invention.

FIG. 5 illustrates a perspective view of a closed state of a re-circulation control valve in an EGR valve for a vehicle in accordance with a preferred embodiment of the present invention.

FIGS. 6A ~ 6C illustrate perspective views of couplers in an EGR valve for a vehicle in accordance with a preferred embodiment of the present invention, respectively.

FIG. 7 illustrates an exploded perspective view of an EGR valve for a vehicle in accordance with a preferred embodiment of the present invention.

FIG. 8 illustrates a partial section of a rotation shaft connected to a coupling in an EGR valve for a vehicle in accordance with a preferred embodiment of the present invention.

FIG. 9 illustrates a perspective view of a state in which a sealing member is coupled to a rotation shaft in an EGR valve for a vehicle in accordance with a preferred embodiment of the present invention.

FIGS. 10A and 10B illustrate perspective views of sealing holders in an EGR valve for a vehicle in accordance with a preferred embodiment of the present invention, respectively.

FIG. 11 illustrates a perspective view of a compression ring in an EGR valve for a vehicle in accordance with a preferred embodiment of the present invention.

FIG. 12 illustrates a section of a sealing holder in an EGR valve for a vehicle in accordance with a preferred embodiment of the present invention.

FIGS. 13A and 13B illustrate perspective views of states in each of which a sealing member is coupled, and mounted to a rotation shaft in an EGR valve for a vehicle in accordance with a preferred embodiment of the present invention, respectively.

FIG. 14 illustrates a section showing a coupled state of a sealing member in an EGR valve for a vehicle in accordance with a preferred embodiment of the present invention.

FIGS. 15A ~ 15E illustrate operation states of an EGR valve for a vehicle.

### DESCRIPTION OF SPECIFIC EMBODIMENTS

Reference will now be made in detail to the specific embodiments of the present invention, examples of which are illustrated in the accompanying drawings. Wherever possible, the same reference numbers will be used throughout the drawings to refer to the same or like parts.

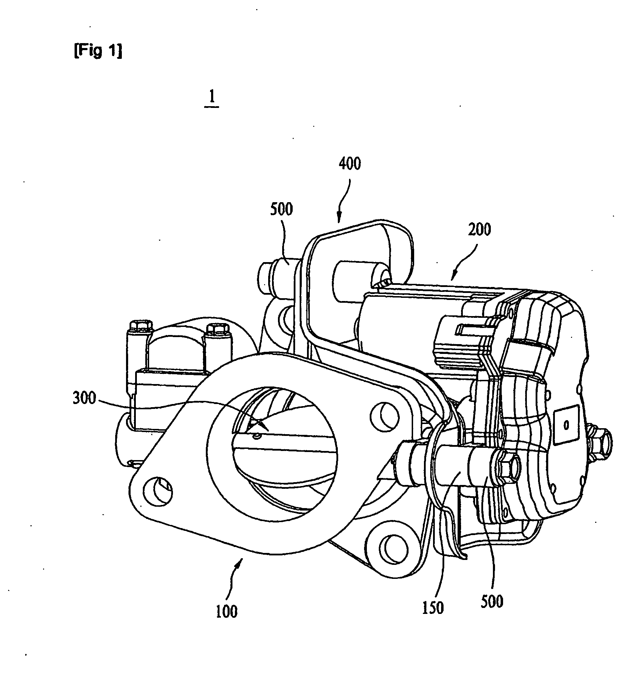

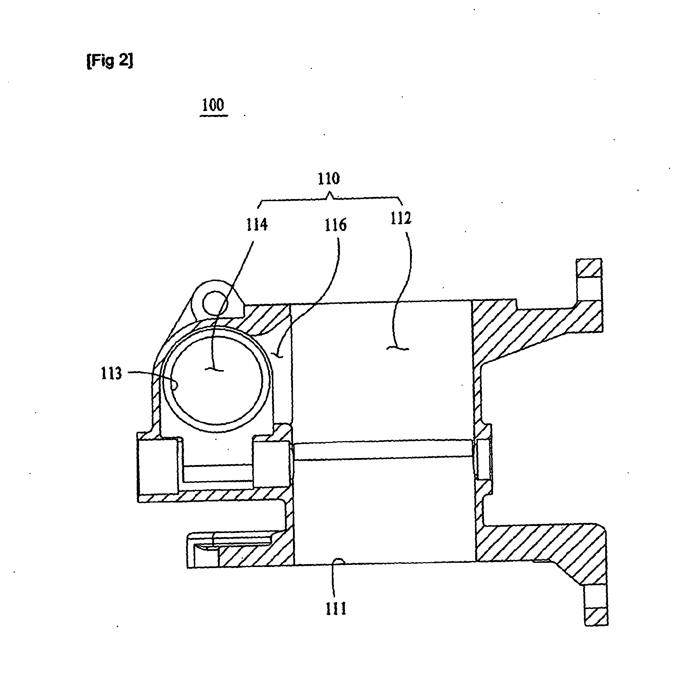

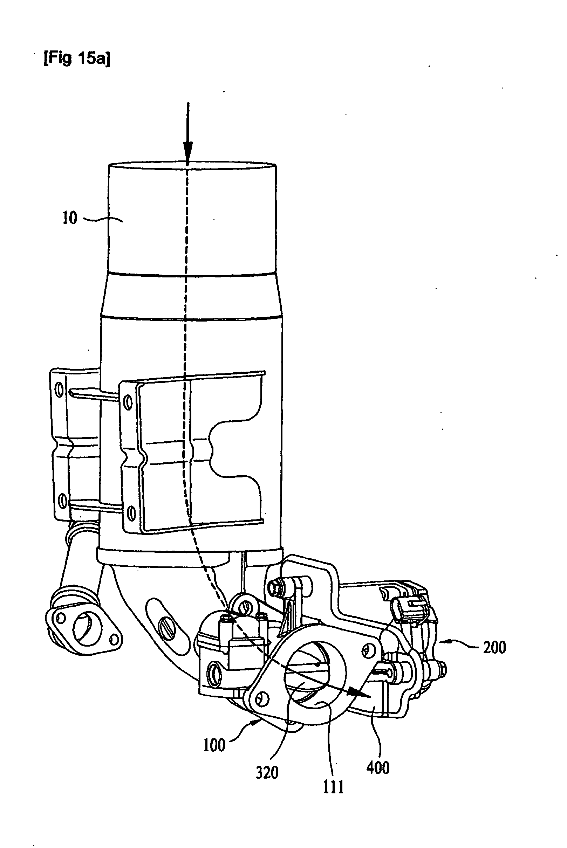

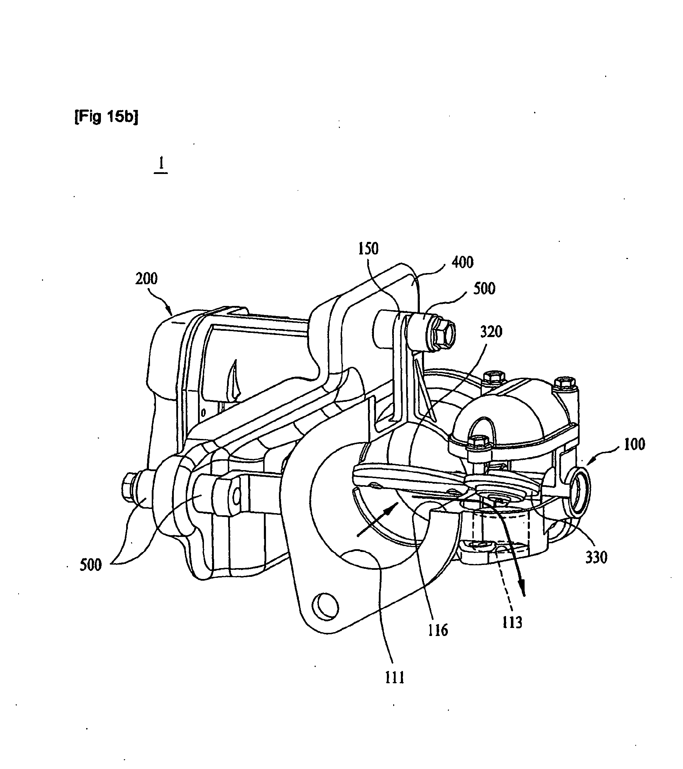

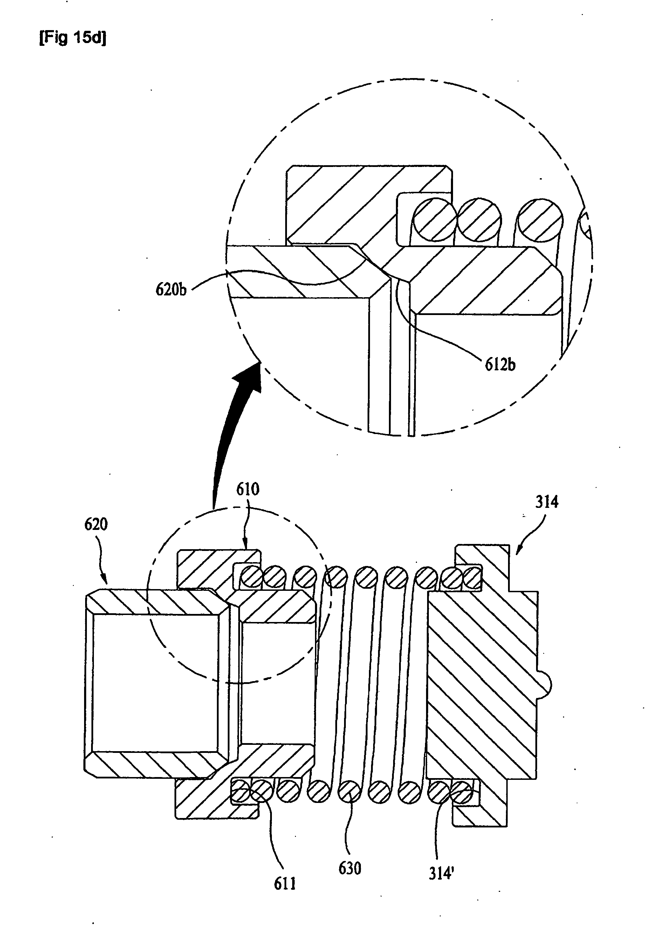

Referring to FIGS. 1 and 2, the EGR valve 1 for a vehicle includes a valve housing 100 connected to an exhaust line 10 (See FIG. 15A) for discharging the exhaust gas therethrough, having a flow line 110 with an inside area divided for taking and re-circulating a portion of the exhaust gas to a suction manifold.

The EGR valve 1 is mounted to the exhaust line 10 between an engine (not shown) and an exhaust manifold
(not shown) for re-circulation of the exhaust gas via a shortest distance at the time the exhaust gas re-circulates from the engine 1 to the engines 1.

The valve housing has a driving unit 200 on one side, and a valve unit 300 mounted in a flow line 110 of the valve housing 100 for receiving driving force from the driving unit 200 directly to control flows of the exhaust gas flowing through the flow line 110 at the same time, individually.

The driving unit 200 includes a motor built therein, a gear assembly of a plurality of gears coupled to a motor shaft of the motor, and a cover on driving unit having the driving unit 200 seated therein.

The EGR valve of the present invention is a low pressure application. Different from a high pressure EGR valve for receiving the exhaust gas from the engine, the lower pressure EGR valve receives the exhaust gas via an exhaust manifold, a turbo-charger, and a DPF (Diesel Particulate Filter Trap), and re-circulates the exhaust gas to the engine. The exhaust gas passed through the EGR valve flows along the exhaust line and discharged to an outside of the vehicle through a ternary catalysis.

Referring to FIG. 2, the flow line 110 in the valve housing 100 includes an exhaust gas flow line 112 having an exhaust gas hole 111 for flow in/out of the exhaust gas therethrough, and a re-circulation flow line 114 having an EGR hole 113 for re-circulating the exhaust gas to a suction manifold.

The exhaust gas flow line 112 has a diameter greater than the re-circulation flow line 114, relatively.

The flow line 110 in the valve housing 100 includes a bypass flow line 116 for making the exhaust gas flow line 112 and the re-circulation flow line 114 in communication. The bypass flow line 116 is a kind of cavity formed between the exhaust gas flow line 112 and the re-circulation flow line 114.

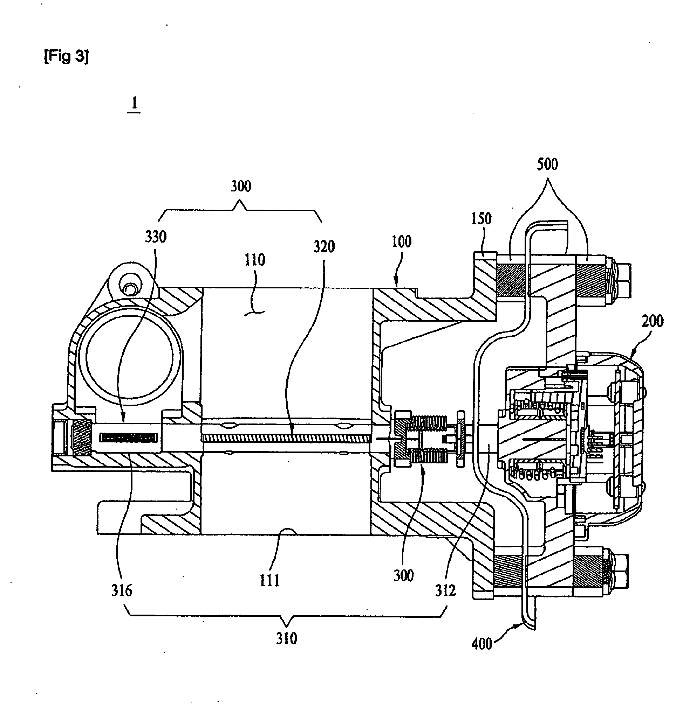

Referring to FIGS. 3 to 5, the valve unit 300 includes a rotation shaft 310 coupled to the driving unit 200 and passed through the flow line 110 of the valve housing 100, an exhaust control valve 320 mounted to the rotation shaft 310 for controlling opening of an exhaust gas hole 111 according to rotation of the rotation shaft 310, and a re-circulation control valve 330 mounted to the rotation shaft 310 for controlling opening of an EGR hole 113 according to rotation of the rotation shaft 310.

The exhaust control valve 320 is a circular plate having a middle portion placed in a slot in the rotation shaft 310 and fastened to the rotation shaft 310 with fastening means. The exhaust control valve 320 has fastening bushes placed in the rotation shaft 310 on opposite sides thereof the exhaust control valve 320 for preventing the exhaust control valve 320 from moving.

The re-circulation control valve 330 has a supporting shaft 332 connected to and projected outward from the rotation shaft 310.

The rotation shaft 310 has a coated layer 302 on a surface thereof for preventing strength thereof from impairing by the high temperature exhaust gas. The coated layer 302 is nitrided to form a nitride on a surface of steel to improve corrosion resistance, abrasion resistance, fatigue strength, and so on.

If the surface of the rotation shaft 310 is nitrided, compactness of the texture, hardness and kind of phase of the nitride formed thus, and an amount of carbon solid solution are changed, to influence to abrasion resistance, and corrosion resistance against the exhaust gas, thereby improving a lifetime.

The re-circulation control valve 330 is opened when the exhaust control valve 320 is closed, and vice versa. Above operation can be made as the exhaust gas hole is formed at 90° with respect to the EGR hole in the valve housing 100.

An opening of the exhaust control valve 320 and an opening of the re-circulation control valve 330 are linearly proportional because the exhaust control valve 320 and the re-circulation control valve 330 are connected to the driving unit 300 which is single driving source, directly.

Mounted between the valve housing 100 and the driving unit 200, there is a heat cutoff plate 400 (See FIG. 1) for preventing the driving unit 200 suffering from damage by the high temperature exhaust gas flowing through the flow line 110. The heat cutoff plate 400 cuts off radiant heat to an outside of the valve housing 100 from the high temperature exhaust gas flowing through the valve housing 100. As a variation of the heat cutoff plate 400, the heat cutoff plate 400 may have a heat cutoff layer on an outside for cutting off the radiant heat.

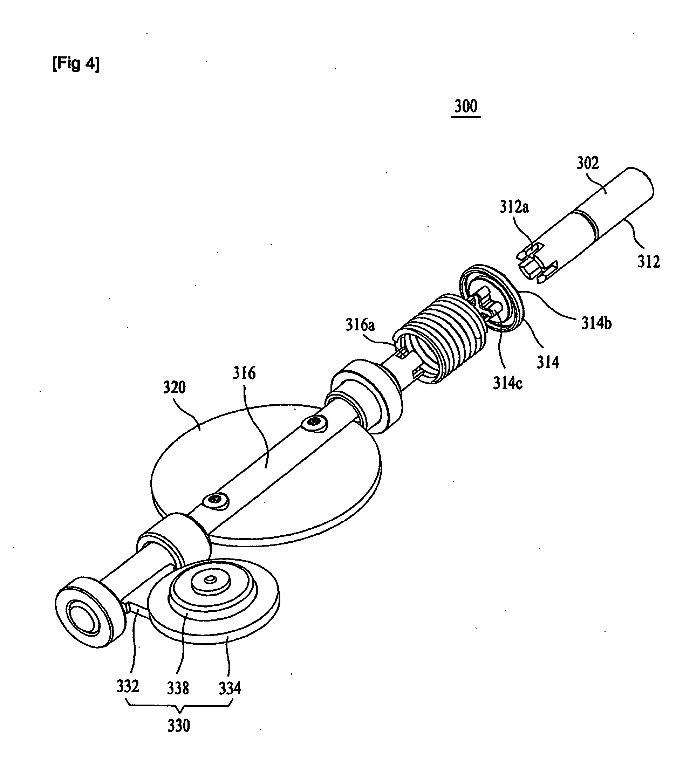

Referring to FIG. 4, the rotation shaft 310 includes a first rotation shaft 312 coupled to a gear unit 210 in the driving unit 200, a coupling 314 coupled to the first rotation shaft 312 for receiving rotation force through the first rotation shaft 312, and a second rotation shaft 316 coupled to the other side of the coupling 314 having the exhaust control valve 320 and the re-circulation valve 330 mounted thereto. The coupling 314 serves as a medium for transmitting the rotation force to the second rotation shaft 316 from the first rotation shaft 312.

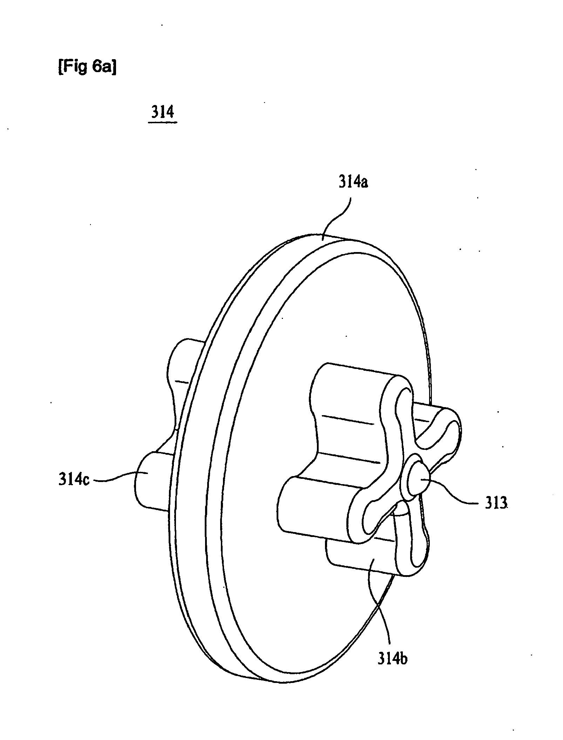

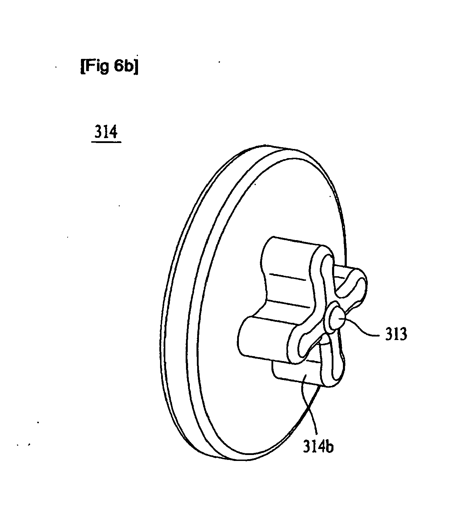

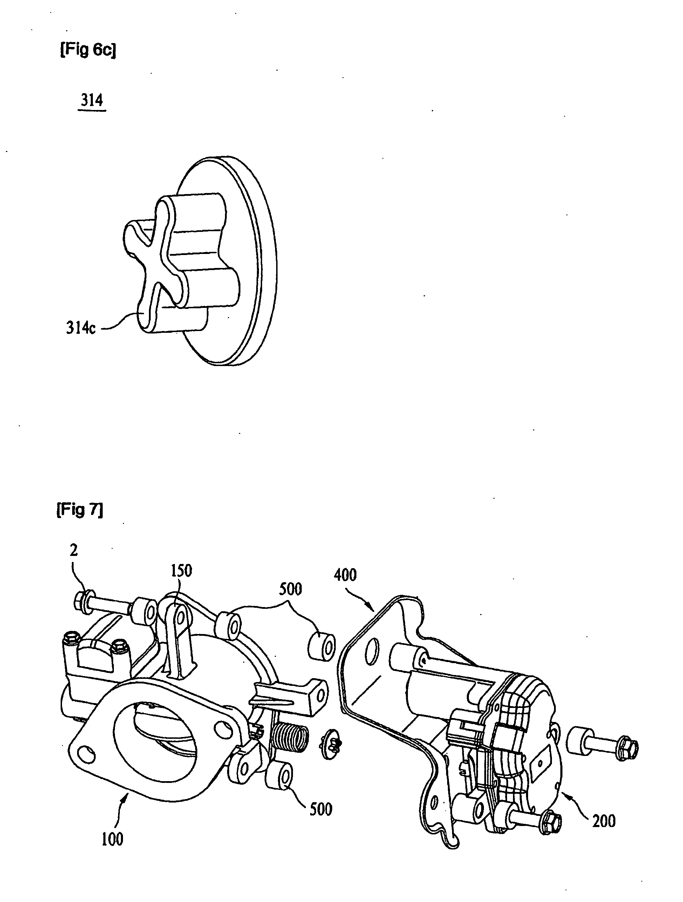

Referring to FIGS. 6A ~ 6C, the coupling 314 includes a coupling plate 314a of a circular disk, first and second cross shafts 314b and 314c projected outwardly to left and right directions from the coupling plate 314a respectively, for engagement with first and second cross recesses 312a and 316a in ends of the first and second rotation shafts 312 and 316 respectively.

The coupling 314 and the first and second rotation shafts 312 and 316 are coupled together by means of the crosses for transmission of the rotation force from the driving unit 200 to the rotation shaft 310 without loss, perfectly.

The first cross shaft 314b has a spacing projection 313 on a center for preventing heat from transmitting to the first rotation shaft 312 from the high temperature exhaust gas through the second rotation shaft 316 and the coupling 314, by making point to point transmission of heat by means of the coupling 314 and the spacing projection 313 on the first rotation shaft 312, which minimizes the transmission of the heat of the high temperature exhaust gas.

Referring to FIG. 7, a mounting portion 150 for putting the valve housing 100 and the driving unit 200 together has a bush 500 mounted thereto for preventing heat from transmission to the driving unit 200 through the valve housing 100.

The mounting portion 150 has a mounting hole for fastening the valve housing 100 to the driving unit 200. There may be a plurality of mounting portions 150 on an outside of the valve housing 100.

The bush 500 is formed of ceramic. Because the ceramic has a low heat conductivity enough to cut off the heat transmission to the driving unit 200 from the valve housing 100, effectively.

There may be a plurality of the bushes 500. That is, the bushes may be mounted on opposite sides of the mounting portions 150.

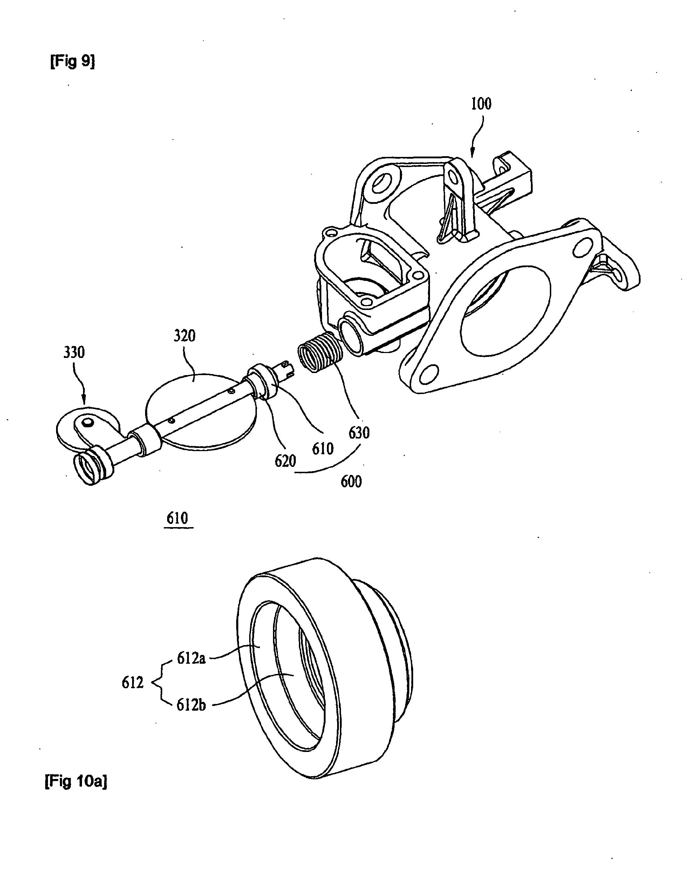

Referring to FIG. 9, there is a sealing member 600 having a sealing holder 610 coupled to the second rotation shaft 316 on an outside circumference of the second rotation shaft 316 in a direction of the second cross recess 316a.

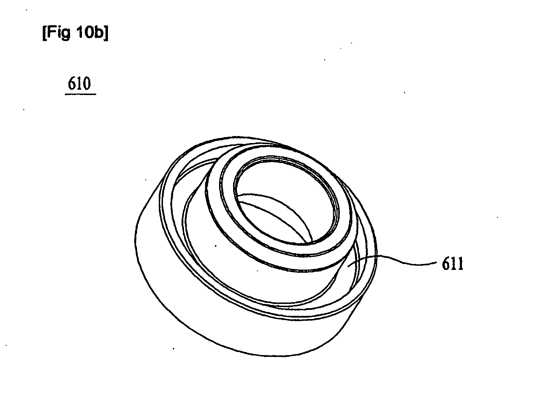

Referring to FIGS. 10A and 10B, the sealing holder 610 has a ring shape coupled to the second rotation shaft 316, tightly. The sealing holder 610 has an inserting hole 612 recessed inward toward the second rotation shaft 316.

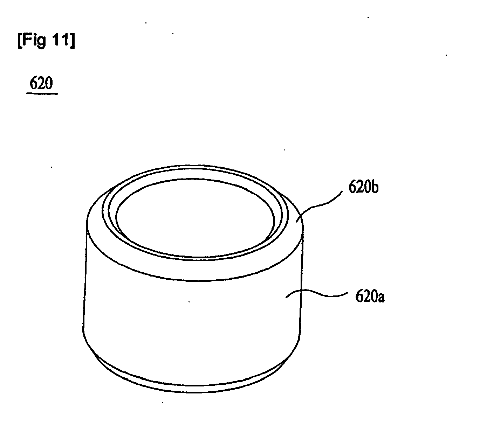

Referring to FIG. 11, the sealing member 600 also has a compression ring 620 positioned between the exhaust control valve 320 coupled to the second rotation shaft 316 and the sealing holder and inserted in the inserting hole 612 in the sealing holder 610.

The compression ring 620 is in linear contact to an inside of the sealing holder 610, and between the coupling 314 and the sealing holder 610, there is an elastic member 630 for biasing the sealing holder 610 toward the compression ring 620. Though the elastic member is shown as a spring on the drawing, the elastic member may have other forms.

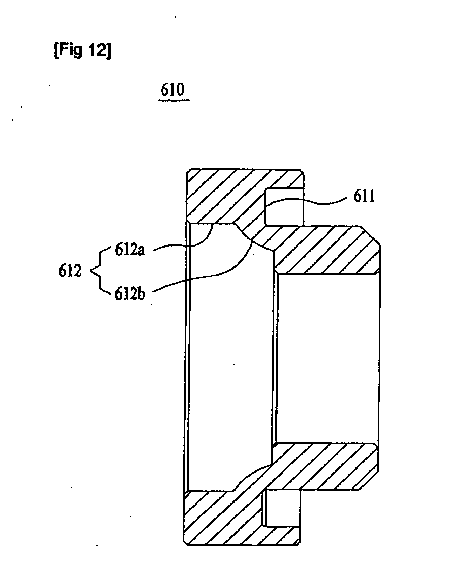

Referring to FIG. 12, the inserting hole 612 has a cylindrical portion 612a for making surface to surface contact with an outside circumferential surface of the compression ring 620, and a first sloped portion 612b extended from the cylindrical portion 612a and sloped inwardly in a length direction of the sealing holder 610.

The compression ring 620 to be joined with the inserting hole 612 has a cylindrical portion 620a extended in a length direction of an outside of the compression ring 620 in conformity with the cylindrical portion 610a and the first sloped portion 610b, and a second sloped portion 620b extended from the cylindrical portion 620a and sloped inwardly in the length direction of the compression ring 620 for making linear contact to the first sloped portion 610b.

The first sloped portion 612b is rounded outwardly so as to be projected for making secure linear contact with the compression ring 620.

Though slopes of the first and second sloped portions 610b and 620b are not specified, it is preferable that the slopes of the first and second sloped portions 610b and 620b are sloped different from each other for making secure linear contact with the compression ring 620.

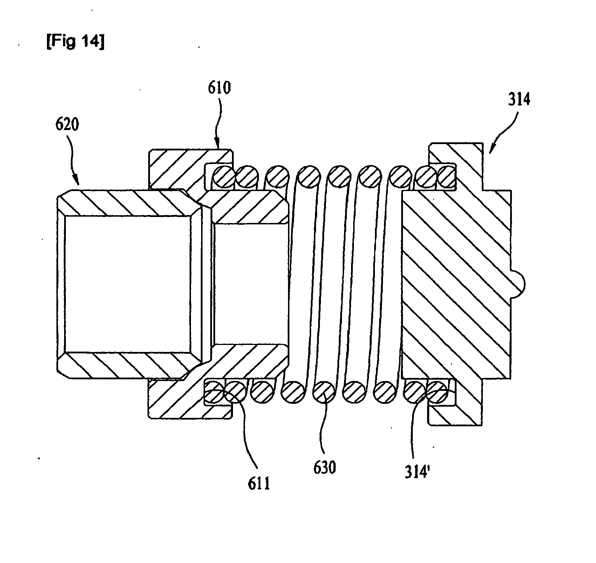

Referring to FIG. 14, the coupling 314 and the sealing holder 610 have seating recesses 314' and 611 for inserting and seating opposite ends of the elastic member 630 respectively. The seating recesses 314' and 611 are recesses for mounting the elastic member 630, securely. The sealing holder 610 is press fit on the second rotation shaft 316, and biased toward the second rotation shaft 316 by the elastic member 630.

The operation of the EGR valve for a vehicle of the present invention will be described with reference to the drawings.

Referring to FIG. 15A, the EGR valve 1 is mounted in the exhaust line 10 through which the exhaust gas is discharged from the engine (not shown).

If a driver turns on a starter in a state the driver is on the vehicle, the engine is operated, and the high temperature exhaust gas flows in a direction of an arrow through the exhaust line 10 from the engine.

Since the motor in the driving unit 200 is not operated before the engine is operated, the rotation shaft 310 of the EGR valve 1 has no driving force applied thereto before the engine is operated.

In this state, the exhaust control valve 320 is in a position in which the exhaust control valve 320 closes the exhaust gas hole 111, and the re-circulation control valve 330 is in a position in which the re-circulation control valve 330 opens the EGR hole 113.

The exhaust gas from the engine generated as the engine is operated moves through the exhaust line 10. The exhaust gas generates harmful substances, including carbon monoxide CO, hydrocarbon HC, nitrogen oxides NOx.

A controller (not shown) of the EGR valve 1 is pre-programmed according to a flow rate of the exhaust gas of the vehicle, and a kind of the vehicle (a gasoline vehicle or a diesel vehicle) for minimizing emission of the nitrogen oxides included in the exhaust gas to the atmosphere, for rotating the shaft of the motor in the driving unit 200 under the control of the controller to rotate the rotation shaft 310.

The operation of the EGR valve of the present invention will be described with reference to the attached drawings.

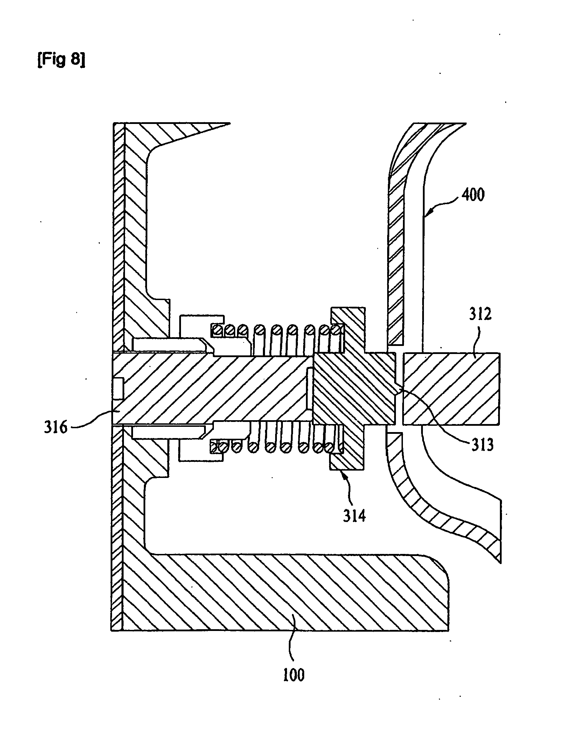

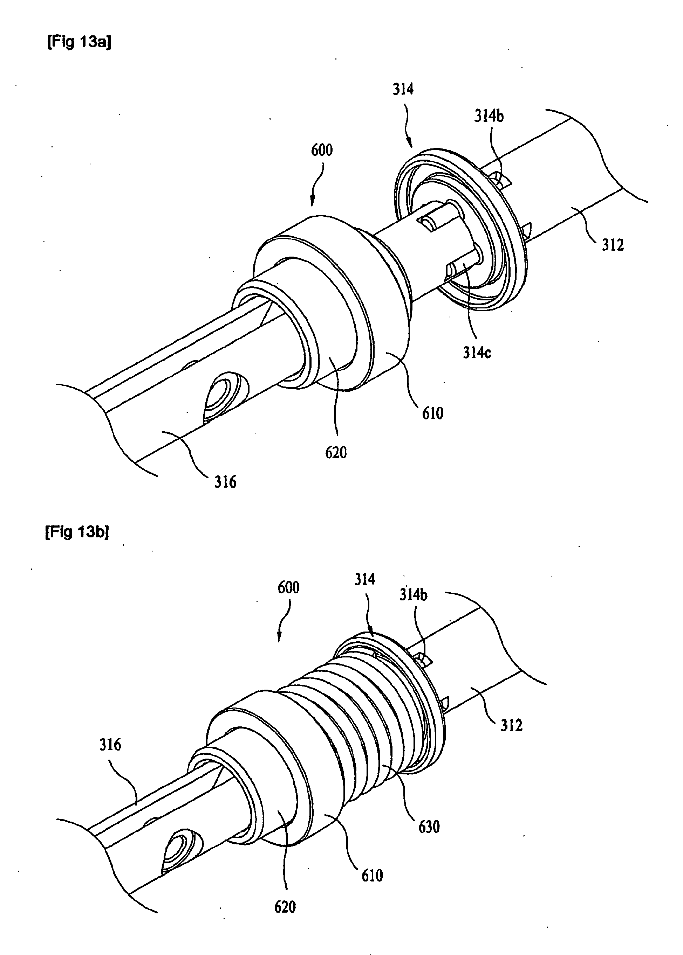

Referring to FIGS. 3 to 15A, the driving unit transmits the rotation force to the first rotation shaft 312 through the motor shaft, and the first rotation shaft 312 rotates in one direction.

Since the first cross recess 312a in the first rotation shaft 312 is engaged with the first cross shaft 314b, the first cross recess 312a receives the rotation force from the first rotation shaft 312 as it is and transmits to the second rotation shaft 316 engaged with the second cross shaft 314c on the other side.

The second rotation shaft 316 receives the driving force from the driving unit 200 as it is to rotate the exhaust control valve 320 in an opening direction from a closed state of the exhaust gas hole 111. Since an angle of opening of the exhaust control valve 320 varies, the angle will not be defined, specifically.

Following opening of the exhaust control valve 320, the re-circulation control valve 330 mounted to the second rotation shaft 316 also rotates toward the EGR hole 113 in proportion to the opening of the exhaust control valve 320.

Referring to FIG. 14A, the exhaust gas flows as shown in the drawing via the exhaust gas hole 11, and as the exhaust control valve 320 is opened at a particular angle, the exhaust gas flows through the EGR hole 113 via the bypass flow line 116 (See FIG. 2) and the recirculation control valve 330.

The exhaust gas flown through the EGR hole 113 flows toward the suction manifold and introduced to the engine again, for reducing a combustion temperature of the engine and improving a fuel cost.

The closing operation of the recirculation valve will be described with reference to the attached drawings.

Referring to FIG. 5, as described before, when the recirculation control valve 330 is closing, the driving unit 200 is put into operation under the control of the controller, to rotate the second rotation shaft 316.

At the time the recirculation control valve 330 is closing the EGR hole 113, the valve seat 334 forms a minute gap around the supporting shaft 332 at the supporting shaft 332 as shown in arrow in the drawing.

In a state the recirculation control valve 330 is biased at one side by the valve seat spring 336, the recirculation control valve 330 has a pressure of the exhaust gas applied thereto in a direction shown in a dashed arrow and spring force applied thereto from the valve seat spring 336 at the same time. As the valve seat 334 is brought into close contact with the EGR hole 113 by the pressure of the exhaust gas and the spring force tightly, the recirculation control valve 330 can maintain a sealing state of the EGR hole 113, securely.

Because the valve seat 334 closes the EGR hole 334 perfectly owing to above operation of the valve seat 334, without forming a gap between the EGR hole 113 and the valve seat 334, leakage of the exhaust gas can be prevented.

The heat cutoff operation of the EGR valve will be described with reference to the attached drawings.

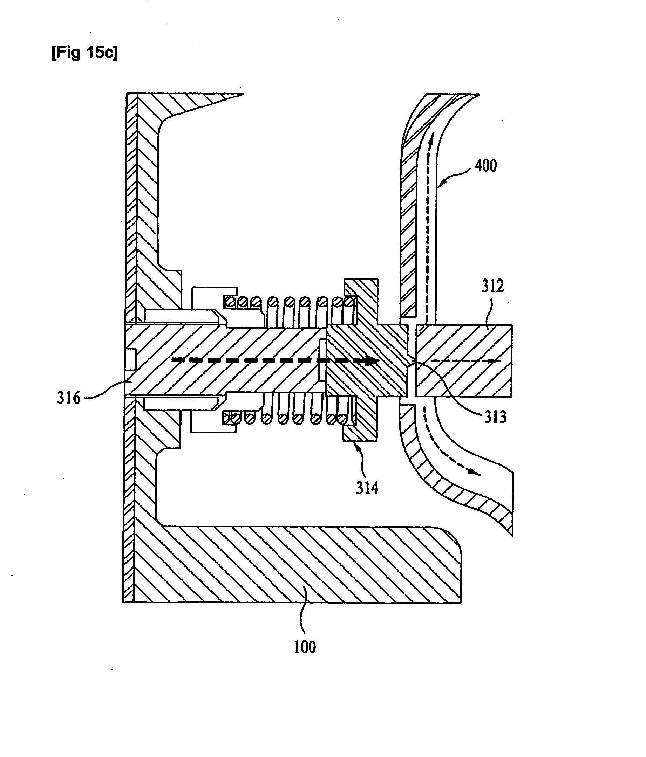

Referring to FIG. 15C, it is inevitable that the valve housing 100 of the EGR valve 1 becomes at a high temperature due to heat conduction from the high temperature exhaust gas flowing through the exhaust gas hole 111.

The exhaust control valve 320 and the recirculation control valve 330 in the valve housing 100 become hot due to heat conduction from repetitive flow of the high temperature exhaust gas, to conduct the heat of the high temperature gas through the rotation shaft 310 having the exhaust control valve 320 and the recirculation control valve 330 mounted thereto.

The second rotation shaft 316 having the exhaust control valve 320 mounted thereto is kept exposed to the high temperature exhaust gas to have the heat conducted thereto. The heat conducted through the second rotation shaft 316 is conducted to the coupling 314 via the second rotation shaft 316 as shown with a thick dashed line.

Since the coupling has the spacing projection 313 at a place connected to the first rotation shaft 312, though a quantity of heat proportional to an area of a diameter of the second rotation shaft 316 is conducted up to the spacing projection where only a quantity of heat proportional to an area of a diameter of the spacing projection is conducted to the first rotation shaft 312.

That is, as the coupling 314 and the first rotation shaft 312 are in point to point contact, the heat conduction from the second rotation shaft 316 to the first rotation shaft 312 is minimized.

If the heat conduction is made thus, the degradation of the driving unit 200 connected to the first rotation shaft 312 can be prevented, permitting to minimize damage to the motor and a printed circuit board mounted in the driving unit 200.

Moreover, together with the spacing projection 313, the heat cutoff plate 400 mounted between the valve housing 100 and the driving unit 200 cuts off the radiant heat from the valve housing 100 to prevent the radiant heat from reaching to the driving unit 200, and the radiant heat is spread along and disperses from the heat cutoff plate 400.

Since the coated layer 302 on the rotation shaft 310 is nitrided, even if the rotation shaft 310 is exposed to the high temperature exhaust gas for a long time period, the coated layer 302 can improve corrosion resistance, abrasion resistance, and fatigue strength.

Along with the heat cutoff by means of the spacing projection 313 and the heat cutoff plate 400, the bushes 500 mounted to the mounting portion 150 where the valve housing 100 and the driving unit 200 fastened thereto cuts off the heat from conducting to the driving unit 200.

Since the bushes 500 of ceramic cut off the heat conduction toward the driving unit to the maximum in a state the bushes 500 are fastened with bolts, degradation of the driving unit 200 can be prevented.

The sealing which prevents the exhaust gas flowing through the EGR valve from leaking will be described with reference to the drawings.

Referring to FIGS. 15C ~ 15E, while the EGR valve 1 is operated as described before, the elastic member 630 presses the sealing holder 610 toward the compression ring 620. FIG. 15C illustrates the second rotation shaft not placed in the compression ring 620, yet.

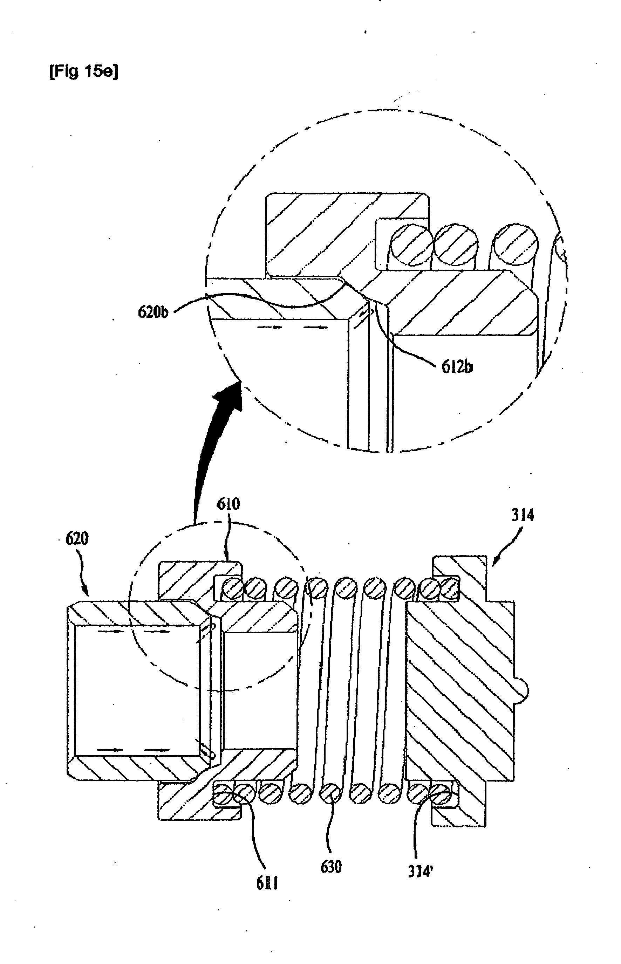

Referring to FIG. 15E, the rotation shaft 310 (See FIG. 3) connected to the driving unit 200 is rotated repeatedly by the driving unit 200. since the rotation shaft 310 positioned in the valve housing 100 is connected to the driving unit 200 via the valve housing 100, the exhaust gas can move following the second rotation shaft 316 in the rotation shaft 310.

Referring to FIG. 15E, though the compression ring 620 has the second rotation shaft 316 (not shown) engaged to an inside surface, there is a minute gap formed between an outside circumferential surface of the second rotation shaft 316 and the inside circumferential surface of the compression ring 620. The gap means very minute gap enough to permit the exhaust gas infiltrates therein and leaks to an outside thereof even in a case the second rotation shaft 316 is brought into close contact with the inside circumferential surface of the compression ring 620, tightly.

The exhaust gas introduced to the gap moves along the cylindrical portion 620a until the first sloped portion 612b and the second sloped portion 620b make linear contact where the exhaust gas, leaks not to an outside of the sealing holder 610, but re-circulates to a gap between the inside circumferential surface of the compression ring 620 and the outside circumferential surface of the second rotation shaft 312, and therefrom flows into an inside of the valve housing 100.

Owing to this, no exhaust gas leaks to an outside thereof through the gap, and stable operation of the EGR valve can be made, and the leakage of the exhaust gas to an outside of the EGR valve can be prevented regardless of the rotation of the rotation shaft 310 following operation of the driving unit 200 owing to the secure engagement of the linear contact portions between the first sloped portion 612b and the second sloped portion 620b.

The elastic member 630 enables to the first sloped portion 612b and the second sloped portion 620b to make linear contact by keeping applying a pressure to the seating recess 611, to improve sealing and preventing leakage of the exhaust gas to an outside of the EGR valve.

Since the linear contact portions of the first sloped portion 612b and the second sloped portion 620b maintain a linear contact state while having least linear contact area, friction at the contact surfaces caused by the repetitive rotation of the rotation shaft 310 is minimized, and generation of a load is minimized.

Since the slopes of the first sloped portion 620b and the first sloped portion 612b are different from each other, the linear contact state can be made securely. Though the slopes of the first sloped portion 620b and the first sloped portion 612b are not defined specifically, it is preferable that the slopes are different from each other for maintaining the linear contact state.

It will be apparent to those skilled in the art that various modifications and variations can be made in the present invention without departing from the scope of the invention. Thus, it is intended that the present invention covers modifications and variations provided they come within the scope of the appended claims.

As has been described, the EGR valve of the present invention has the following advantages.

The EGR valve in a vehicle can reduce a combustion temperature and fuel cost since the driving of the EGR valve by means of one driving source enables effective operation of the EGR valve.

The prevention of degradation of the driving unit caused by the radiant heat and conductive heat generated at the EGR valve permits a lifetime of the EGR valve.

The reduction of leakage of the exhaust gas from the EGR valve to the atmosphere permits to minimize emission of pollutants, and the linear contact permits to reduce an operation load and minimize noise.

The EGR valve of the present invention can improve marketability of the EGR valve.

## Claims

1. An EGR valve for a vehicle comprising:
a valve housing (100) connected to an exhaust passage for discharging exhaust gas therethrough, having a flow passage (110) with an inside area divided for taking and re-circulating a portion of the exhaust gas to a suction manifold;
a driving unit (200) on one side of the valve housing;
a valve unit (300) mounted in the flow passage (110) of the valve housing (100) for receiving driving force from the driving unit (200) directly to control flows of the exhaust gas flowing through the flow passage;
wherein the valve unit (300) comprises an exhaust control valve (320), a re-circulation valve (330) and a rotation shaft (310) coupled to the driving unit (200) and passing through the flow passage (110) in the valve housing (100);
wherein the rotation shaft (310) comprises a first rotation shaft (312) coupled to a gear unit in the driving unit, a coupling (314) coupled to the first rotation shaft (312) for receiving rotation force through the first rotation shaft, and a second rotation shaft (316) coupled to the other side of the coupling having the exhaust control valve (320) and the re-circulation valve (330) mounted thereto;
wherein the coupling prevents heat from transmitting to the driving unit from the exhaust gas of high temperature.

2. The EGR valve as claimed in claim 1, wherein the flow passage in the valve housing includes;
an exhaust gas flow passage having an exhaust gas hole formed therein for flow in/out of the exhaust gas; and
a recirculation flow passage having an EGR hole for recirculation of the exhaust gas to the suction manifold.

3. The EGR valve as claimed in claim 2, wherein the flow passage in the valve housing further includes a bypass flow passage for making the exhaust gas flow passage and the re-circulation flow passage in communication.

4. The EGR valve as claimed in claim 1, wherein the valve unit includes;
an exhaust control valve mounted to the rotation shaft for controlling opening of an exhaust gas hole according to rotation of the rotation shaft, and
a re-circulation control valve mounted to the rotation shaft for controlling opening of an EGR hole according to rotation of the rotation shaft.

5. The EGR valve as claimed in claim 1, further comprising a heat cutoff plate mounted between the valve housing and the driving unit for preventing the driving unit suffering from damage by the high temperature exhaust gas flowing through the flow passage.

6. The EGR valve as claimed in claim 1, wherein the coupling includes;
a coupling plate,
first and second cross shafts projected outwardly to left and right directions from the coupling plate respectively,
wherein the first and second cross shafts are engaged with first and second cross recesses in ends of the first and second rotation shafts respectively.

7. The EGR valve as claimed in claim 6,
wherein the first cross shaft includes a spacing projection on a center for preventing heat from transmitting to the first rotation shaft from the high temperature exhaust gas through the second rotation shaft and the coupling,
wherein the spacing projection makes point to point contact with the center of the inside of the first cross recess in the first rotation shaft.

8. The EGR valve as claimed in claim 1, wherein the valve portion has a sealing member mounted thereto for preventing leakage of the exhaust gas.

9. The EGR valve as claimed in claim 1 or 8, wherein the sealing member includes a sealing holder coupled to the second rotation shaft on an outside circumference of the second rotation shaft in a direction of the second cross recess,
wherein the sealing holder has an inserting hole recessed inward toward the second rotation shaft.

10. The EGR valve as claimed in claim 9, wherein the sealing member further includes a compression ring positioned between the exhaust control valve coupled to the second rotation shaft and the sealing holder and inserted in the inserting hole in the sealing holder.

11. The EGR valve as claimed in claim 10, wherein the compression ring is in linear contact to an inside of the sealing holder.

12. The EGR valve as claimed in claim 11, further comprising an elastic member between the coupling and the sealing holder for biasing the sealing holder toward the compression ring.

13. The EGR valve as claimed in claim 1, wherein the coupling is **characterized in that** its contact area contacting with the first rotation shaft is smaller than its contact area contacting with the second rotation shaft.

## Patentansprüche

1. Abgasrückführungs- (EGR) Ventil für Fahrzeuge, umfassend:
ein Ventilgehäuse (100), das an einen Abgasdurchgang angeschlossen ist, um Abgase durch diesen abzuleiten, mit einem Strömungsdurchlass (110) mit einer Innenfläche, die unterteilt ist, um einen Teil der Abgase zu entnehmen und zu einem Ansaugkrümmer zurückzuführen;
eine Antriebseinheit (200) auf einer Seite des Ventilgehäuses;
eine Ventileinheit (300), die in dem Strömungsdurchlass (110) des Ventilgehäuses (100) montiert ist, um eine Antriebskraft direkt von der Antriebseinheit (200) aufzunehmen, um die Strömungen der Abgase, die durch den Strömungsdurchlass fließen, zu regulieren;
wobei die Ventileinheit (300) ein Abgasregelventil (320), ein Rückführungsventil (330) und eine Drehwelle (310), die mit der Antriebseinheit (200) gekoppelt ist und durch den Strömungsdurchlass (110) in dem Ventilgehäuse (100) geht, umfasst;
wobei die Drehwelle (310) eine erste Drehwelle (312), die mit einem Getriebeblock in der Antriebseinheit gekoppelt ist, eine Kupplung (314), die mit der ersten Drehwelle (312) gekoppelt ist, um eine Drehkraft über die erste Drehwelle aufzunehmen, und eine zweite Drehwelle (316), die mit der anderen Seite der Kupplung gekoppelt ist, auf der das Abgasregelventil (320) und das Rückführungsventil (330) montiert sind, umfasst;
wobei die Kupplung eine Wärmeübertragung an die Antriebseinheit von den Abgasen auf Hochtemperatur verhindert.

2. EGR-Ventil nach Anspruch 1, wobei der Strömungsdurchlass in dem Ventilgehäuse Folgendes umfasst:
einen AbgasStrömungsdurchlass, der ein Abgasloch umfasst, das darin für den Einlauf/Auslauf der Abgase gebildet ist; und
einen Rückführungs-Strömungsdurchlass, der ein EGR-Loch für die Rückführung der Abgase zum Ansaugkrümmer umfasst.

3. EGR-Ventil nach Anspruch 2, wobei der Strömungsdurchlass im Ventilgehäuse ferner einen NebenStrömungsdurchlass umfasst, um den AbgasStrömungsdurchlass mit dem Rückführungs-Strömungsdurchlass in Verbindung zu setzen.

4. EGR-Ventil nach Anspruch 1, wobei die Ventileinheit Folgendes umfasst:
ein Abgasregelventil, das auf der Drehwelle montiert ist, um die Öffnung eines Abgaslochs gemäß der Drehung der Drehwelle zu regulieren, und
ein Rückführungsregelventil, das auf der Drehwelle montiert ist, um die Öffnung eines EGR-Lochs gemäß der Drehung der Drehwelle zu regulieren.

5. EGR-Ventil nach Anspruch 1, ferner umfassend eine Wärmeabschirmplatte, die zwischen dem Ventilgehäuse und der Antriebseinheit montiert ist, um zu verhindern, dass die Antriebseinheit durch die Abgase auf Hochtemperatur, die durch den Strömungsdurchlass fließen, beschädigt wird.

6. EGR-Ventil nach Anspruch 1, wobei die Kupplung Folgendes umfasst:
eine Kupplungsplatte,
erste und zweite Querwellen, die jeweils nach links und rechts von der Kupplungsplate aus nach außen vorstehen,
wobei die ersten und zweiten Querwellen jeweils mit ersten und zweiten Quervertiefungen in den Enden der ersten und zweiten Querwellen in Eingriff gebracht werden.

7. EGR-Ventil nach Anspruch 6, wobei die erste Querwelle einen Abstandsvorsprung in der Mitte umfasst, um eine Wärmeübertragung auf die erste Drehwelle von den Abgasen auf Hochtemperatur über die zweite Drehwelle und die Kupplung zu verhindern,
wobei der Abstandsvorsprung einen Punkt-zu-Punkt-Kontakt mit der Mitte des Inneren der ersten Quervertiefung in der ersten Drehwelle herstellt.

8. EGR-Ventil nach Anspruch 1, wobei der Ventilabschnitt ein Abdichtungsorgan aufweist, das darauf montiert ist, um ein Entweichen der Abgase zu verhindern.

9. EGR-Ventil nach Anspruch 1 oder 8, wobei das Abdichtungsorgan einen Dichtungshalter umfasst, der mit der zweiten Drehwelle auf einem Außenumfang der zweiten Drehwelle in einer Richtung der zweiten Quervertiefung gekoppelt ist,
wobei der Dichtungshalter ein Einsteckloch aufweist, das nach innen in Richtung auf die zweite Drehwelle vertieft ist.

10. EGR-Ventil nach Anspruch 9, wobei das Abdichtungsorgan ferner einen Druckring umfasst, der zwischen dem Abgasregelventil, das mit der zweiten Drehwelle gekoppelt ist, und dem Dichtungshalter positioniert ist und in das Einsteckloch in dem Dichtungshalter eingesteckt ist.

11. EGR-Ventil nach Anspruch 10, wobei der Druckring sich in geradlinigem Kontakt mit dem Innern des Dichtungshalters befindet.

12. EGR-Ventil nach Anspruch 11, ferner umfassend ein elastisches Organ zwischen der Kupplung und dem Dichtungshalter zum Vorspannen des Dichtungshalters in Richtung auf den Druckring.

13. EGR-Ventil nach Anspruch 1, wobei die Kopplung **dadurch gekennzeichnet ist, dass** ihre Kontaktfläche, die mit der ersten Drehwelle in Kontakt steht, kleiner ist als ihre Kontaktfläche, die mit der zweiten Drehwelle in Kontakt steht.

## Revendications

1. Soupape de recyclage de gaz d'échappement (EGR) pour véhicule, comprenant:
un boîtier de soupape (100) connecté à un passage d'échappement pour rejeter des gaz d'échappement à travers celui-ci, ayant un passage d'écoulement (11) avec une superficie intérieure divisée pour prélever et recycler une partie du gaz d'échappement vers un collecteur d'aspiration ;
une unité d'entraînement (200) d'un côté du boîtier de soupape ;
une unité de soupape (300) montée dans le passage d'écoulement (110) du boîtier de soupape (100) pour recevoir une force d'entraînement de l'unité d'entraînement (200) directement pour réguler les flux des gaz d'échappement circulant à travers le passage d'écoulement ;
dans laquelle l'unité de soupape (300) comprend une soupape de régulation d'échappement (320), une soupape de recyclage (330) et un arbre rotatif (310) couplé avec l'unité d'entraînement (200) et passant à travers le passage d'écoulement (110) dans le boîtier de soupape (100) ;
dans laquelle l'arbre rotatif (310) comprend un premier arbre rotatif (312) couplé avec un bloc d'engrenages dans l'unité d'entraînement, un accouplement (314) couplé avec le premier arbre rotatif (312) pour recevoir une force de rotation à travers le premier arbre rotatif, et un deuxième arbre rotatif (316) couplé avec l'autre côté de l'accouplement sur lequel sont montées la soupape de régulation d'échappement (320) et la soupape de recyclage (330) ;
dans laquelle l'accouplement empêche un transfert de chaleur vers l'unité d'entraînement à partir des gaz d'échappement à haute température.

2. Soupape EGR selon la revendication 1, dans laquelle le passage d'écoulement dans le boîtier de soupape comprend:
un passage d'écoulement de gaz d'échappement comportant un trou pour gaz d'échappement formé dans celui-ci pour l'entrée/la sortie des gaz d'échappement ; et
un passage d'écoulement de recyclage comportant un trou EGR pour le recyclage des gaz d'échappement vers le collecteur d'aspiration.

3. Soupape EGR selon la revendication 2, dans laquelle le passage d'écoulement dans le boîtier de soupape comprend en outre un passage d'écoulement de dérivation pour faire communiquer le passage d'écoulement des gaz d'échappement avec le passage d'écoulement de recyclage.

4. Soupape EGR selon la revendication 1, dans laquelle l'unité de soupape comprend:
une soupape de régulation des gaz d'échappement, montée sur l'arbre rotatif pour réguler l'ouverture d'un trou pour gaz d'échappement selon la rotation de l'arbre rotatif, et
une soupape de régulation de recyclage, montée sur l'arbre rotatif pour réguler l'ouverture d'un trou EGR selon la rotation de l'arbre rotatif.

5. Soupape EGR selon la revendication 1, comprenant en outre une plaque de blocage thermique montée entre le boîtier de soupape et l'unité d'entraînement pour empêcher l'unité d'entraînement de subir des dommages dus aux gaz d'échappement à haute température circulant à travers le passage d'écoulement.

6. Soupape EGR selon la revendication 1, dans laquelle l'accouplement comprend :
une plaque d'accouplement,
des premier et deuxième arbres transversaux faisant saillie vers l'extérieur à gauche et à droite à partir de la plaque d'accouplement, respectivement,
dans laquelle les premier et deuxième arbres transversaux sont mis en prise dans des premier et deuxième enfoncements transversaux dans les extrémités des premier et deuxième arbres rotatifs, respectivement.

7. Soupape EGR selon la revendication 6, dans laquelle le premier arbre transversal comprend une saillie d'espacement au centre pour empêcher un transfert de chaleur au premier arbre rotatif à partir des gaz d'échappement à haute température à travers le deuxième arbre rotatif et l'accouplement,
dans laquelle la saillie d'espacement établit un contact de point à point avec le centre de l'intérieur du premier enfoncement transversal dans le premier arbre rotatif.

8. Soupape EGR selon la revendication 1, dans laquelle la portion de soupape présente un organe d'étanchéité monté sur celle-ci pour empêcher toute fuite des gaz d'échappement.

9. Soupape EGR selon la revendication 1 ou 8, dans laquelle l'organe d'étanchéité comprend un support d'étanchéité couplé avec le deuxième arbre rotatif sur une circonférence extérieure du deuxième arbre rotatif dans une direction du deuxième enfoncement transversal,
dans laquelle le support d'étanchéité présente un trou d'insertion en retrait vers l'intérieur en direction du deuxième arbre rotatif.

10. Soupape EGR selon la revendication 9, dans laquelle l'organe d'étanchéité comprend en outre un segment de compression positionné entre la soupape de régulation d'échappement couplée avec le deuxième arbre rotatif et le support d'étanchéité et inséré dans le trou d'insertion dans le support d'étanchéité.

11. Soupape EGR selon la revendication 10, dans laquelle le segment de compression se trouve en contact linéaire avec un intérieur du support d'étanchéité.

12. Soupape EGR selon la revendication 11, comprenant en outre un organe élastique entre l'accouplement et le support d'étanchéité pour précontraindre le support d'étanchéité en direction du segment de compression.

13. Soupape EGR selon la revendication 1, dans laquelle l'accouplement est **caractérisé en ce que** sa superficie de contact en contact avec le premier arbre rotatif est inférieure à sa superficie de contact en contact avec le deuxième arbre rotatif.
